# DEMANDE DE BREVET EUROPEEN

(11) **EP 3 343 409 A1**
(43) Date de publication de la demande: **04.07.2018**
(21) Numéro de dépôt: 17210998.5
(22) Date de dépôt: 28.12.2017
(51) Int. Cl.: G06F 17/30

(54) **PROCÉDÉ ET PLATEFORME POUR L'ÉLÉVATION DES DONNÉES SOURCES EN DONNÉES SÉMANTIQUES INTERCONNECTÉES**

(30) Priorité: 29.12.2016 FR 1663527
(71) Demandeur: Atos Integration, 95870 Bezons (FR)
(72) Inventeur: KEPEKLIAN, Gabriel, 95250 BEAUCHAMP (FR)
(74) Mandataire: Debay, Yves

(57) **Abrégé**

La présente invention concerne une plateforme et un procédé pour l'« élévation » de sources de données hétérogènes en données sémantiques interconnectées, la plateforme comprenant au moins un module « sélection d'ontologie » pour générer des données sémantiques, ledit module étant formé d'au moins une couche « recherche d'ontologie », une couche « métriques de la qualité d'ontologie » et une couche «mesures de similarité ontologique », un module « conversion de données » pour convertir le format des données sémantiques produites par le module de sélection en format RDF, un module « interconnexion des données » pour créer, au moyen d'un ensemble d'outils, des liens entre les données sémantiques converties au format RDF, ladite plateforme contenant au moins une architecture matérielle et informatique pour mettre en oeuvre, via des instructions exécutables, le procédé d'« élévation » de données.

## Description

### DOMAINE TECHNIQUE DE L'INVENTION

La présente invention concerne le domaine de traitement de l'information et plus particulièrement une plateforme et un procédé pour le traitement de l'information sur le Web sémantique.

### ARRIERE-PLAN TECHNOLOGIQUE DE L'INVENTION

Le Web sémantique (également appelé « Web des données »), est une extension standardisée du Web classique permettant aux machines de comprendre la sémantique, la signification de l'information sur le Web. Il étend le réseau des hyperliens entre des pages Web classiques par un réseau de liens entre données structurées permettant ainsi aux agents automatisés d'accéder plus intelligemment aux différentes sources de données contenues sur le Web et, de cette manière, d'effectuer des tâches (recherche, interconnexion, apprentissage, etc.) plus précises pour les utilisateurs.

Plusieurs concepts de bases, en particulier l'ontologie, sont utilisés pour le développement du Web sémantique. L'ontologie, est définie comme un ensemble structuré de concepts permettant de donner un sens aux informations. Cette structuration prend la forme d'un graphe orienté de concepts.

Il existe des méthodes et des outils permettant de construire des ontologies afin d'assurer le traitement de données et d'en extraire la sémantique. Cependant, ces méthodes et/ou outils ne se focalisent pas, par exemple, sur les caractéristiques des ontologies pertinentes au cadre de données liées et/ou nécessitent au moins une entrée de données manuelle. Ce qui peut les rendre moins adaptés lorsque, par exemple, les volumes de flux de données à traiter sont importants.

### DESCRIPTION GENERALE DE L'INVENTION

La présente invention a pour but de pallier certains inconvénients de l'art antérieur concernant le traitement de l'information.

Un premier but de l'invention est de proposer une infrastructure pour le traitement de bases de données afin d'en extraire l'information.

Ce but est atteint par une plateforme pour l'« élévation » de sources de données hétérogènes en données sémantiques interconnectées organisée en cinq étages (a, b, c, d, e) formant un socle unique « tout en un ». Ladite plateforme - contenant au moins une architecture matérielle et informatique comprenant au moins un processeur, au moins une mémoire pour le stockage de données et/ou des instructions exécutables, par ledit processeur - est conçue pour permettre la mise en oeuvre de fonctionnalités supportées par un ensemble extensible de modules et au moins un « système de gestion » pour le contrôle des processus desdits modules de la plateforme. A chaque étage, la liste des modules est extensible. L'architecture (socle et modules) du dispositif complet qu'est la plateforme est décrit à l'aide d'une ontologie propre qui permet à la plateforme de se connaître elle-même. Cela lui confère aussi des moyens originaux de paramétrage (amont), de traçabilité (aval) mais aussi de rejeu effectif ou non (explicabilité). La souplesse architecturale obtenue fait de la plateforme un terrain d'expérimentations pour de nouvelles fonctionnalités. La vocation des modules peut aussi être aisément variabilisée ou modifiée: d'une destination purement expérimentale à proprement industrielle. La liste des modules de la plateforme comprend au moins :
a) un module de « sélection d'ontologie » pour choisir une ou plusieurs ontologies destinées à la conversion des données,
b) des modules de « conversion de données » qui prennent en entrée des jeux de données, appelée sources de données, dans divers formats hétérogènes (CSV, XML, SHP, GML, ...) ainsi que des extractions de base de données ou de TrilpeStore pour les convertir en RDF (le modèle des données sémantiques) en utilisant la sémantique décrite dans les ontologies sélectionnées ou dans la structure propre des sources (dans ce cas, une ontologie ad hoc est générée à la volée),
c) un module de « publication de données » pour déposer les sources converties dans l'entrepôt interne de données,
d) plusieurs modules d' « interconnexion des données » permettant d'établir différents types de liens entre les données entreposées au moyen d'un ensemble d'outils, ces liens entre les données sémantiques sont des données sémantiques à part entière,
e) plusieurs modules d' « exploitation des données » destinés à produire et exposer les résultats des divers traitements réalisables sur les données sémantiques.

Selon une autre particularité, ladite plateforme comporte en outre :
- au moins une couche « recherche d'ontologie », une couche « métriques de la qualité d'ontologie », une «couche de mesures de similarité ontologique » et au moins des instructions exécutables par un processeur pour permettre la mise en oeuvre d'une fonctionnalité d'interconnexion desdites couches afin de former ledit module « sélection d'ontologie » ;
- au moins des instructions exécutables par un processeur pour mettre en oeuvre un ensemble d'outils permettant le calcul automatique d'identifiants clés dans les ensembles de données du module « interconnexion des données » afin de trouver des ressources équivalentes à travers les ensembles de données.

Selon une autre particularité, les instructions du module « sélection d'ontologie », exécutables par un processeur, permettent la définition des méthodes et d'indicateurs pour la sélection des ontologies utilisables, chaque ontologie étant adaptée au domaine et à la structure de données d'un fournisseur donné, et ont la capacité à soutenir l'interconnexion des données, la fiabilité et la persistance des autorités de publication, la conformité aux normes du Web sémantique.

Selon une autre particularité, les instructions du module « sélection d'ontologie », exécutables par un processeur, permettent la construction d'au moins un catalogue d'ontologies, dont la construction est basée sur la définition des méthodes et des indicateurs, ledit catalogue comprenant pour chaque ontologie, des indicateurs de son utilisation effective, le degré d'interconnexion à d'autres ontologies dans ou hors du catalogue et des métadonnées relatives à l'autorité de publication.

Selon une autre particularité, les instructions exécutables du module « sélection d'ontologie » contiennent des structures de représentation pour permettre, lors de leur exécution par un processeur, aux structures de représentation ad hoc du module de sélection de structurer et de manipuler des données issues de domaines spécifiques sur le Web sémantique.

Selon une autre particularité, les instructions du module « sélection d'ontologie », exécutables par un processeur, permettent de définir :
- un processus par lequel un fournisseur de données peut sélectionner dans ledit catalogue les ontologies ou schémas ontologiques relatifs aux données à publier, et
- des règles de mappage ou de conversion entre le modèle de données source et la structure de données cible conforme à l'ontologie sélectionnée.

Selon une autre particularité, les instructions du module « conversion de données » exécutables par un processeur permettent de concevoir les ensembles d'URI à utiliser sur la plate-forme, de produire des directives pour aider les éditeurs de données à trouver la bonne façon d'associer les URI à leurs données, ladite politique URI couvrant notamment les sujets suivants :
- choisir le nom de domaine et la structure du chemin afin de maximiser la persistance et l'ergonomie de l'URI ;
- maintenir ou modifier les URI lorsque les ressources apparaissent, fusionnent, meurent ;
- résolution de l'URI, par représentation des ressources et interconnexion entre elles ;
lesdites directives pour les éditeurs suggérant des méthodes d'alignement entre les identifiants originaux ou caractéristiques de données et les URI publiées, en tenant compte de différentes situations selon que les données sources ont ou non des identifiants existants ou naturels.

Selon une autre particularité, les instructions de chaque module « conversion de données » exécutables par un processeur fournissent un ensemble d'outils pour concevoir et pour mettre en oeuvre au moins une bibliothèque de connecteurs pour la conversion de données, le codage desdites données pour l'internationalisation et la localisation, ledit ensemble d'outils étant réutilisable entre domaines et applications.

Selon une autre particularité, l'ensemble d'outils fournis par les instructions de chaque module de « conversion de données » exécutables par un processeur est utilisé pour migrer au format RDF des ensembles de données des fournisseurs.

Selon une autre particularité, la sélection desdits ensembles de données est faite de manière à évaluer la robustesse et l'évolutivité de l'ensemble d'outils en vérifiant, au moins, les points suivants:
- la capacité des ontologies sélectionnées dans le catalogue à faire face à une grande variété de schémas de données, sans besoin d'extensions de modèle spécifiques ou de coupe de données;
- la capacité de l'ensemble de conversion d'outils pour assurer la migration des données dans la plus grande variété de formats ou les formats originaux et encodages sans travail supplémentaire ou permettant des interventions ad hoc pendant le flux de travail;
- la capacité des ensembles de données à fournir aux modules « interconnexion de données » des données à interconnecter soit entre les ensembles de données fournis ou avec d'autres ensembles de données appartenant à un nuage de données liées.

Selon une autre particularité, l'ensemble d'outils fournis par les instructions exécutables, par un processeur, des modules « conversion de données » permettent d'adjoindre des licences et droits aux données.

Selon une autre particularité, l'ensemble d'outils fournis par les instructions, exécutables par un processeur, de chaque module « conversion de données » permettent d'ajouter à chaque triplet RDF associé à des données une « notion » source, chaque source spécifiant l'origine réelle ou virtuelle desdites données.

Selon une autre particularité, l'ensemble d'outils, pour le calcul automatique d'identifiants clés dans des ensembles de données dans chaque module « interconnexion de données », comprend au moins une méthode d'analyse de données statistiques utilisant un modèle de liaison de données (record linkage) « Fellegi-Sunter » modifié pour l'appariement d'ensembles de données RDF.

Selon une autre particularité, l'ensemble d'outils, pour le calcul automatique d'identifiants clés dans des ensembles de données dans chaque module « interconnexion de données », comprend au moins un vocabulaire de métadonnées pour rattacher des résultats de calcul d'une propriété clé aux ensembles de données traitées.

Selon une autre particularité, l'ensemble d'outils, pour le calcul automatique d'identifiants clés dans des ensembles de données dans chaque module « interconnexion de données », comprend au moins un outil d'interconnexion basé au moins sur les identifiants clés générés par le calcul automatique d'une propriété clé.

Selon une autre particularité, la plateforme comprend également un module « publication de données » pour le stockage de données sémantiques.

Selon une autre particularité, le module « publication de données » a une architecture de type serveur ou nuage de données et est soit autonome, soit intégré dans la plateforme.

Selon une autre particularité, le module « publication de données » comprend au moins un système de stockage RDF, et un ensemble d'outils fournis par les instructions, exécutables par un processeur, dudit module pour permettre aux fournisseurs de données d'exposer les données, issues de l'«élévation » de données, sur la plate-forme sous forme de données liées.

Selon une autre particularité, le module « publication de données » comprend également des interfaces de requête et de programmation et un ensemble d'outils pour fournir le mécanisme de déréférencement d'URI et la publication des interconnexions résultant des outils du module d'interconnexion de données.

Selon une autre particularité, la plateforme comprend également un module « évaluation des données et applications » pour l'évaluation du processus de l'«élévation » et le développement d'applications en amont de la publication des données sur la plateforme.

Selon une autre particularité, les instructions, exécutables par un processeur, du module « évaluation des données et applications » fournissent un ensemble d'outils pour développer des moyens pour interroger et/ou consulter et/ou visualiser des données publiques.

Selon une autre particularité, ledit ensemble d'outils comprend au moins une interface pour demander un retour d'expérience des fournisseurs de données et des utilisateurs sur les applications développées afin d'améliorer les services et fonctionnalités desdites applications.

Selon une autre particularité, les codes exécutés dans le module «évaluation des données et applications », réalisent au moins:
- des interfaces utilisateur web pour des visualisations géographiques et applications web composites carte/temps de données statistiques;
- des interfaces web utilisateur qui informent sur la provenance et la fiabilité des données en utilisant des modèles de rattachement de licences et droits ;
- des interfaces web utilisateur qui déploient des standards du Web libre pour générer des graphiques et d'autres visualisations relatives à des informations d'arrière-plan quantitatives.

Selon une autre particularité, les codes exécutés dans le module «évaluation des données et applications», réalisent également au moins une API pour des applications mobiles, ladite API fournissant un accès aux données liées publiées dans la plateforme.

Selon une autre particularité, le « système de gestion » comprend des instructions exécutables par un processeur fournissant au moins une interface de programmation (API) pour donner un accès à chaque module de la plateforme, ladite API permettant d'inclure l'«élévation» de données dans des outils externes, le développement de nouveaux modules étendant ou améliorant la publication de données.

Un autre but de l'invention est de proposer un procédé permettant de remédier à un ou plusieurs inconvénients de l'art antérieur

Ce but est atteint par un procédé d'«élévation» de données sources en données sémantiques interconnectées comprenant un ensemble de sous-processus, exécutés au moins sur un processeur d'une architecture informatique comprenant au moins une mémoire pour le stockage de données, ledit ensemble réalisant au moins les étapes suivantes:
- sélection d'ontologies pour la publication de données;
- conversion desdites données au format approprié ;
- interconnexion des données avec d'autres sources, et
- publication desdites données liées, ledit procédé étant caractérisé en ce que:
   - le sous-processus de sélection d'ontologies comprend au moins une étape d'exécution d'un processus de recherche ontologique, d'un processus métrique d'ontologie, d'un processus de mesure de similarité d'ontologie, lesdits processus étant connectés;
   - le sous-processus d'interconnexion de données exécutant au moins un calcul automatique d'identifiants clés dans des ensembles de données au moyen d'un modèle statistique.

Selon une autre particularité, le sous-processus de sélection d'ontologies comprend également les étapes de :
- définition et sélection des méthodes et des indicateurs pour la sélection des ontologies utilisables ;
- construction d'un catalogue d'ontologies basé sur les méthodes et indicateurs définis ;
- modélisation des connaissances spécifiques ;
- mappage du modèle de données des fournisseurs aux ontologies du catalogue.

Selon une autre particularité, le sous-processus de conversion de données comprend des étapes de:
- définition d'une politique URI et production de lignes directrices pour les éditeurs de données;
- développement d'une suite d'outils de conversion ;
- application de la suite d'outils de conversion aux ensembles de données;
- rattachement des licences et droits aux données.

Selon une autre particularité, l'étape de rattachement des licences et droits aux données comprend au moins les étapes :
- d'ajouter des informations de provenance aux graphes RDF à l'aide de graphes nommés et d'une extension du modèle RDF et de la syntaxe RDF/XML;
- de liaison des informations de licence à la provenance et aux graphiques nommés et fournir des moyens pour récupérer le lien d'information sur la licence à un élément de données;
- d'extension des mécanismes de requête afin de permettre la traçabilité des données utilisées dans les réponses;
- de liaison des droits d'accès aux graphes en indiquant les contraintes à vérifier pour qu'une requête puisse utiliser les données de ces graphes et fournir un formalisme pour décrire les droits;
- d'extension des mécanismes de requête afin de prendre en compte le droit d'accès lors du processus de résolution des requêtes.

Selon une autre particularité, le sous-processus d'interconnexion de données comprend également les étapes:
- de développement d'outils d'interconnexion d'ensemble de données ;
- d'application des outils d'interconnexion aux ensembles de données.

Selon une autre particularité, les méthodes et les indicateurs sont sélectionnés de façon itérative, par évaluation de leur efficacité (par une approche de type scoring) par rapport à la construction du catalogue, la conversion des données et l'interconnexion des données.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels:

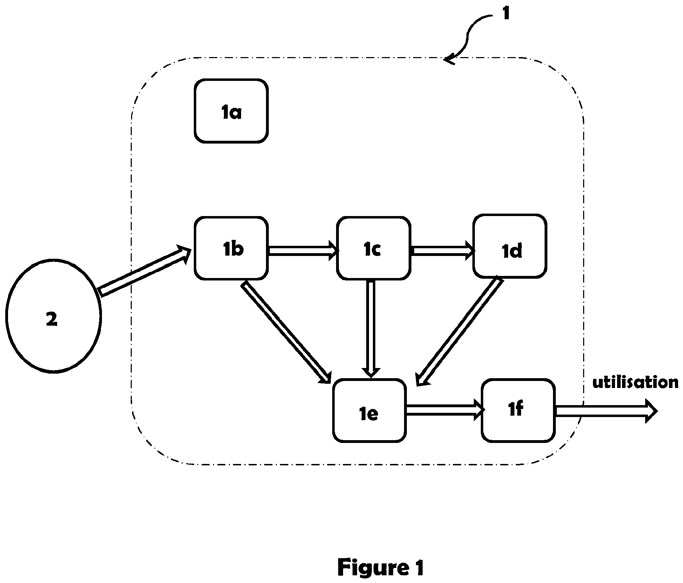

- La figure 1 représente un schéma de l'architecture de la plateforme d'«élévation» de données sources en données sémantiques interconnectées, selon un mode de réalisation;

### DESCRIPTION DES MODES DE REALISATION PREFERES DE L'INVENTION

La présente invention concerne une plateforme (1, figure 1) pour le traitement de données sources et leur transformation en données sémantiques interconnectées ou liées.

Dans certains modes de réalisation, la plateforme (1) pour l'« élévation » de données sources ou brutes, en données sémantiques interconnectées comprend au moins un module « sélection d'ontologie » (1b) pour générer des données sémantiques, à partir d'un flux de données en provenance d'au moins une base (2) de données (voir figure 1), un module «conversion de données» (1c) contenant des ensembles de données à interconnecter pour convertir le format des données sémantiques produites par le module de sélection (1b) en format RDF, un module « interconnexion des données » (1d) pour créer, au moyen d'un ensemble d'outils, des liens entre les données sémantiques converties au format RDF, ladite plateforme contient au moins une architecture matérielle et informatique comprenant au moins un processeur, au moins une mémoire pour le stockage de données et/ou des instructions exécutables, par le processeur, pour permettre la mise en oeuvre les fonctionnalités de chaque module et au moins un « système de gestion» (1a) pour le contrôle des processus de chaque module de la plateforme, ladite plateforme étant caractérisée en ce qu'elle comporte en outre:
- au moins une couche « recherche d'ontologie », une couche « métriques de la qualité d'ontologie », une couche de «mesures de similarité ontologique » et au moins des instructions exécutables par un processeur pour permettre la mise en oeuvre d'une fonctionnalité d'interconnexion desdites couches afin de former ledit module « sélection d'ontologie » (1b);
- au moins des instructions exécutables par un processeur pour mettre en oeuvre un ensemble d'outils permettant le calcul automatique d'identifiants clés dans les ensembles de données du module « interconnexion des données » (1d), afin de trouver des ressources équivalentes à travers les ensembles de données.

Par «élévation » de données ou « élévation sémantique» de données, on entend un processus consistant à extraire la sémantique de divers types de données (non-structurées, semi-structurées ou structurées) et/ou des métadonnées non-sémantiques et à traduire lesdites données en relations, attributs et concepts au sein d'une ontologie. Cette dernière, est définie comme un ensemble structuré de concepts permettant de donner un sens aux informations, de modéliser un ensemble de connaissances dans un domaine donné et de représenter un corpus de connaissances sous une forme utilisable par un ordinateur. L'ontologie décrit, en général, des objets, des ensembles de données ou classes, des attributs (propriétés, fonctionnalités, caractéristiques ou paramètres que les objets peuvent posséder et/ou partager), des relations ou liens entre lesdits objets et/ou des évènements correspondants à des changements subis par des attributs ou des relations.

Le format RDF (cadre de description de ressources ou «Resources Description Framework » en anglais) est un langage d'ontologie servant à décrire des ressources et/ou d'affirmer des relations entre lesdites ressources. Il peut être utilisé pour annoter des documents écrits dans des langages non-structurés, ou comme interface pour des documents écrits dans des langages ayant une sémantique équivalente (par exemple, des bases de données). L'élément constitutif de base du RDF est un ensemble de triplets (sujet, prédicat, objet), où le sujet est la ressource à décrire, le prédicat un type de propriété applicable au sujet, et l'objet une donnée ou une autre ressource. Les éléments de ces triplets peuvent être des URIs (identifiants de ressource uniformes ou « Uniform Resource Identifiers » en anglais) des littéraux (valeurs constantes) ou des variables. L'ensemble de triplets est représenté, en général, par un graphe dont l'origine est son sujet et la destination son objet. Les documents RDF peuvent être écrits en différentes syntaxes, y compris en XML. Mais RDF en soi n'est pas un dialecte XML. Il est possible d'avoir recours à d'autres syntaxes pour exprimer les triplets. RDF est simplement une structure de données constituée de noeuds et organisée en graphe comme mentionné ci-dessus.

Dans certains modes de réalisation, les instructions du module «sélection d'ontologie» (1b), exécutables par un processeur, permettent la définition des méthodes et d'indicateurs pour la sélection des ontologies utilisables. Chaque ontologie est adaptée au domaine et à la structure de données d'un fournisseur donné. Lesdites instructions ont, également, la capacité à soutenir l'interconnexion des données, la fiabilité et la persistance des autorités de publication, la conformité aux normes du Web sémantique.

Dans certains modes de réalisation, les instructions du module «sélection d'ontologie» (1b), exécutables par un processeur, permettent la construction d'au moins un catalogue d'ontologies, la construction étant basée sur la définition des méthodes et des indicateurs. Ledit catalogue comprend pour chaque ontologie des indicateurs de son utilisation effective, le degré d'interconnexion à d'autres ontologies dans ou hors du catalogue et des métadonnées relatives à l'autorité de publication.

Pour la construction du catalogue, les méthodes et indicateurs sont appliqués à un large éventail d'ontologies, soit disponibles dans des répertoires publics ou moteurs de recherche soit auprès des fournisseurs de données. Ledit catalogue est construit suivant un processus itératif et incrémental, dans lequel chaque construction s'ajoute à la précédente et l'enrichit.

Dans certains modes de réalisation, les instructions du module «sélection d'ontologie» (1b), exécutables par un processeur, permettent à des structures de représentation ad hoc, contenues dans le module de sélection, de structurer et de manipuler des données issues de domaines spécifiques sur le Web sémantique. Par exemple et de manière non-limitative, si les données à traiter concernent des entités géo-localisées ou des données territoriales, les instructions exécutables fournissent des outils permettant d'annoter les dites données géographiques avec une ontologie des concepts géographiques.

Dans certains modes de réalisation, les instructions du module «sélection d'ontologie» (1b), exécutables par un processeur, permettent de définir
- un processus par lequel un fournisseur de données peut sélectionner dans ledit catalogue les ontologies ou schémas ontologiques relatifs aux données à publier, et
- des règles de mappage ou de conversion entre le modèle de données source et la structure de données cible conforme à l'ontologie sélectionnée.

Par «mappage», on entend le processus permettant d'associer tout type de données d'un ensemble donné à celles d'un ensemble différent, l'objectif étant de passer d'un ensemble à un autre sans problème de compatibilité.

Dans certains modes de réalisation, les instructions du module «conversion de données » (1c), exécutables par un processeur, permettent de concevoir les ensembles d'URI à utiliser sur la plateforme (1), de produire des directives pour aider les éditeurs de données à trouver la bonne façon d'associer les URIs à leurs données, ladite politique URI couvrant notamment les sujets suivants:
- choisir le nom de domaine et la structure du chemin afin de maximiser la persistance et l'ergonomie de l'URI;
- maintenir ou modifier les URI lorsque les ressources apparaissent, fusionnent, meurent;
- résolution d'URI, par représentation des ressources et interconnexion entre elles;
lesdites directives pour les éditeurs suggérant des méthodes d'alignement entre les identifiants originaux ou caractéristiques de données et les URI publiés, en tenant compte de différentes situations selon que les données sources ont ou non des identifiants existants ou naturels.

Un URI est une courte chaîne de caractères identifiant une ressource sur un réseau (par exemple une ressource Web) physique ou abstraite. Les URIs, dont l'URL (localisateur uniforme de ressource) avec le préfixe «http» est un cas particulier, sont des briques essentielles pour le Web sémantique en général et pour la conversion de données en particulier. En effet, une bonne conversion des données requiert une bonne identification desdites données. Ainsi, une mauvaise conception d'URIs peut induire une mauvaise conversion des données.

Dans certains modes de réalisation, les instructions du module «conversion de données» (1c), exécutables par un processeur, fournissent un ensemble d'outils pour concevoir et mettre en oeuvre au moins une bibliothèque de connecteurs pour la conversion de données, le codage desdites données pour l'internationalisation et la localisation, ledit ensemble d'outils étant réutilisable entre domaines et applications.

Une grande quantité de données sont actuellement disponibles dans une pléthore de formats comprenant, par exemple et de manière non-limitative, des bases de données, des tableurs, des documents XML, des formats de fichiers propriétaires. Les connecteurs mis en oeuvre par l'ensemble d'outils de conversion, permettent ainsi de passer d'un format à l'autre sans incompatibilité.

Dans certains modes de réalisation, l'ensemble d'outils fourni par les instructions du module «conversion de données» (1c), exécutables par un processeur, est utilisé pour migrer au format RDF les ensembles de données des fournisseurs.

Dans certains modes de réalisation, la sélection desdits ensembles de données est faite de manière à évaluer la robustesse et l'évolutivité de l'ensemble d'outils en vérifiant, au moins, les points suivants:
- la capacité des ontologies sélectionnées dans le catalogue à faire face à une grande variété de schémas de données, sans besoin d'extensions de modèle spécifiques ou de coupe de données;
- la capacité de l'ensemble de conversion d'outils pour assurer la migration des données dans la plus grande variété de formats ou les formats originaux et encodages sans travail supplémentaire ou permettant des interventions ad hoc pendant le flux de travail;
- la capacité des ensembles de données à fournir au module «interconnexion de données» (1d) des données à interconnecter soit entre les ensembles de données fournis ou avec d'autres ensembles de données appartenant à un nuage de données liées.

Dans certains modes de réalisation, l'ensemble d'outils fournis par les instructions du module «conversion de données» (1c), exécutables par un processeur, permettent d'adjoindre des licences et droits aux données.

Lors de l'interrogation ou du raisonnement sur des métadonnées à partir du Web sémantique, la source de ces métadonnées peut être d'une grande importance, en particulier, lorsqu'on considère par exemple des problèmes de qualité de service, de licence ou de droits d'accès. Le langage de requête SPARQL, qui permet de rechercher, d'ajouter, de modifier ou de supprimer des données RDF disponibles à travers le Web sémantique, fournit un mot-clé pour faire correspondre les modèles à des graphes nommés et ne permet pas d'avoir des informations sur la source desdites données. Cependant, dans les modèles de données RDF qui se concentrent sur l'expression de triplets, les instructions exécutables par un processeur permettent, dans de nombreux cas, d'ajouter à ces triplets RDF la notion de source pour chaque triplet, typiquement un IRI (Identificateur de ressource internationalisé) spécifiant leur origine réelle ou virtuelle. Ladite source comprenant également, par exemple, les informations sur la provenance des données et les licences et droits.

Par IRI, on entend un type d'adresse informatique prenant en compte les divers alphabets utilisés dans les différentes langues du monde.

Dans certains modes de réalisation, l'ensemble d'outils fournis par les instructions, exécutables par un processeur, du module «conversion de données» (1c) permettent d'ajouter à chaque triplet RDF associé à des données une «notion» source, chaque source spécifiant l'origine réelle ou virtuelle desdites données.

Dans certains modes de réalisation, l'ensemble d'outils, pour le calcul automatique d'identifiants clés dans des ensembles de données dans le module «interconnexion de données» (1d), comprend au moins une méthode d'analyse de données statistiques utilisant un modèle de liaison d'archives «Fellegi-Sunter» modifié pour l'appariement d'ensembles de données RDF.

L'interconnexion des données vise à identifier des ressources équivalentes à travers des ensembles de données. Les outils d'interconnexion actuels requièrent, nécessairement d'entrer manuellement dans l'algorithme, les propriétés à comparer afin d'identifier, par exemple, une ressource de façon unique. Le modèle modifié de «Fellegi-Sunter» permet de rendre cette tâche automatique.

Dans certains modes de réalisation, l'ensemble d'outils, pour le calcul automatique d'identifiants clés dans des ensembles de données dans le module «interconnexion de données» (1d), comprend au moins un vocabulaire de métadonnées pour rattacher des résultats de calcul d'une propriété clé aux ensembles de données traitées.

Dans certains modes de réalisation, l'ensemble d'outils, pour le calcul automatique d'identifiants clés dans des ensembles de données dans le module «interconnexion de données» (1d), comprend au moins un outil d'interconnexion basé au moins sur les identifiants clés générés par le calcul automatique d'une propriété clé.

Dans certains modes de réalisation, la plateforme comprend également un module «publication de données» (1e) pour le stockage de données sémantiques.

Dans certains modes de réalisation, le module «publication de données» (1e) a une architecture de type serveur ou nuage de données et est soit autonome, soit intégré dans la plateforme (1).

Dans certains modes de réalisation, le module «publication de données» (1e) comprend au moins un système de stockage RDF, et un ensemble d'outils fournis par les instructions dudit module, exécutables par un processeur, pour permettre aux fournisseurs de données d'exposer les données, issus de l'«élévation» de données, sur la plate-forme sous forme de données liées.

Dans certains modes de réalisation, le module «publication de données» (1e) comprend également des interfaces de requête et de programmation et un ensemble d'outils pour fournir le mécanisme de déréférencement d'URI et la publication des interconnexions résultant des outils du module d'interconnexion de données (1d).

Dans certains modes de réalisation, la plateforme comprend également un module «évaluation des données et applications» (1f) pour l'évaluation du processus d'«élévation» et le développement d'applications en amont de la publication des données sur la plateforme.

Les modules «sélection d'ontologie» (1b), «conversion de données» (1c), et «interconnexion des données » (1d) sont reliés module «publication de données» (1e), ce dernier étant à son tour relié au module «évaluation des données et applications» (1f). Les données issues du module «sélection d'ontologie» (1b) sont transmises au module «conversion de données» (1c) pour être converties au format RDF selon les ontologies sélectionnées. À ce stage les données peuvent être transmises au module «publication de données» (1e) pour stockage dans une mémoire dédiée, bien qu'elles ne soient pas interconnectées. Pour l'interconnexion, les données doivent passer par le «interconnexion des données» (1d) après avoir traversé le module «conversion de données» (1c).

Dans certains modes de réalisation, les instructions du module «évaluation des données et applications», (1f) exécutables par un processeur, fournissent un ensemble d'outils pour développer des moyens pour interroger et/ou consulter et/ou visualiser des données publiques.

Dans certains modes de réalisation, ledit ensemble d'outils comprend au moins une interface pour demander un retour d'expérience des fournisseurs de données et des utilisateurs sur les applications développées afin d'améliorer les services et fonctionnalités desdites applications.

Dans certains modes de réalisation, les codes exécutés dans le module «évaluation des données et applications » (1f), réalisent au moins:
- des interfaces utilisateur web pour des visualisations géographiques et applications web composites carte/temps de données statistiques;
- des interfaces web utilisateur qui informent sur la provenance et la fiabilité des données en utilisant des modèles de rattachement de licences et droits;
- des interfaces web utilisateur qui déploient des standards du Web libre pour générer des graphiques et d'autres visualisations relatives à des informations d'arrière-plan quantitatives.

Dans certains modes de réalisation, les codes exécutés dans le module «évaluation des données et applications», réalisent également au moins une API pour des applications mobiles, ladite API fournissant un accès aux données liées publiées dans la plateforme (1).

Dans certains modes de réalisation, le «système de gestion» (1a) comprend des instructions, exécutables par un processeur, fournissant au moins une interface de programmation (API) pour donner un accès à chaque module de la plateforme, ladite API permettant d'inclure l'«élévation» de données dans des outils externes, le développement de nouveaux modules étendant ou améliorant la publication de données.

La présente invention concerne également un procédé d'«élévation» de données permettant de transformer des données sources en données sémantiques interconnectées ou liées.

Dans certains modes de réalisation, le procédé d'«élévation» de données sources en données sémantiques interconnectées comprend un ensemble de sous-processus, exécutés au moins sur un processeur d'une architecture informatique comprenant au moins une mémoire pour le stockage de données, ledit ensemble réalisant au moins les étapes suivantes:
- sélection d'ontologies pour la publication de données;
- conversion desdites données au format approprié ;
- interconnexion des données avec d'autres sources, et
- publication desdites données liées, ledit procédé étant caractérisé en ce que:
   - le sous-processus de sélection d'ontologies comprend au moins une étape d'exécution d'un processus de recherche ontologique, d'un processus métrique d'ontologie, d'un processus de mesure de similarité d'ontologie, lesdits processus étant connectés;
   - le sous-processus d'interconnexion de données exécutant au moins un calcul automatique d'identifiants clés dans des ensembles de données au moyen d'un modèle statistique.

Dans certains modes de réalisation, le sous-processus de sélection d'ontologies comprend également les étapes de:
- définition et sélection des méthodes et des indicateurs pour la sélection des ontologies utilisables;
- construction d'un catalogue d'ontologies basé sur les méthodes et indicateurs définis;
- modélisation des connaissances spécifiques;
- mappage du modèle de données des fournisseurs aux ontologies du catalogue.

Dans certains modes de réalisation, le sous-processus de conversion de données comprend des étapes de:
- définition d'une politique URI et production de lignes directrices pour les éditeurs de données;
- développement d'une suite d'outils de conversion;
- application de la suite d'outils de conversion aux ensembles de données;
- rattachement des licences et droits aux données.

Dans certains modes de réalisation, l'étape de rattachement des licences et droits aux données comprend au moins les étapes :
- d'ajout d'informations de provenance aux graphes RDF à l'aide de graphes nommés et d'une extension du modèle RDF et de la syntaxe RDF/XML;
- de liaison des informations de licence à la provenance et aux graphiques nommés et fournir des moyens pour récupérer le lien d'information sur la licence à un élément de données;
- d'extension des mécanismes de requête afin de permettre la traçabilité des données utilisées dans les réponses;
- de liaison des droits d'accès aux graphes en indiquant les contraintes à vérifier pour qu'une requête puisse utiliser les données de ces graphes et fournir un formalisme pour décrire les droits;
- d'extension des mécanismes de requête afin de prendre en compte le droit d'accès lors du processus de résolution des requêtes.

Dans certains modes de réalisation, le sous-processus d'interconnexion de données comprend également les étapes:
- de développement d'outils d'interconnexion d'ensemble de données ;
- d'application des outils d'interconnexion aux ensembles de données.

Dans certains modes de réalisation, les méthodes et les indicateurs sont sélectionnés de façon itérative, par évaluation de leur efficacité par rapport à la construction du catalogue, la conversion des données et l'interconnexion des données.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Plateforme (1) pour l'«élévation» sources de données hétérogènes en données sémantiques interconnectées organisée en cinq étages (a,b,c,d,e) formant un socle unique « tout en un », la plateforme - contenant au moins une architecture matérielle et informatique comprenant au moins un processeur, au moins une mémoire pour le stockage de données et/ou des instructions exécutables, par ledit processeur -pour permettre la mise en oeuvre de fonctionnalités supportées par un ensemble extensible de modules et au moins un « système de gestion » (1a) pour le contrôle des processus desdits modules de la plateforme (1), permettant à chaque étage, d'étendre la liste des modules et l'architecture (socle et modules) de la plateforme est décrite à l'aide d'une ontologie propre qui permet à la plateforme de se connaître elle-même, pour lui conférer des moyens originaux de paramétrage (amont), de traçabilité (aval) mais aussi de rejeu effectif ou non (explicabilité), de souplesse (modification des modules), La liste des modules de la plateforme comprend au moins :
a) un module de «sélection d'ontologie» (1b) pour choisir une ou plusieurs ontologies destinées à la conversion des données,
b) des modules de «conversion de données » (1c) qui prennent en entrée des jeux de données, appelée sources de données, dans divers formats hétérogènes (CSV, XML, SHP, GML, ...) ainsi que des extractions de base de données ou de TrilpeStore pour les convertir en RDF (le modèle des données sémantiques) en utilisant la sémantique décrite dans les ontologies sélectionnées ou dans la structure propre des sources (dans ce cas, une ontologie ad hoc est générée à la volée),
c) un module de «publication de données » (1e) pour déposer les sources converties dans l'entrepôt interne de données,
d) plusieurs modules d' « interconnexion des données » (1d) permettant d'établir différents types de liens entre les données entreposées au moyen d'un ensemble d'outils, ces liens entre les données sémantiques sont des données sémantiques à part entière,
e) plusieurs modules d' « exploitation des données » destinés à produire et exposer les résultats des divers traitements réalisables sur les données sémantiques.

2. Plateforme (1) selon la revendication 1, **caractérisée en ce qu'**elle comporte en outre:
• au moins une couche « recherche d'ontologie », une couche « métriques de la qualité d'ontologie », une couche «mesures de similarité ontologique » et au moins des instructions exécutables par un processeur pour permettre la mise en oeuvre d'une fonctionnalité d'interconnexion desdites couches afin de former ledit module «sélection d'ontologie» (1b).
• au moins des instructions exécutables par un processeur pour mettre en oeuvre un ensemble d'outils permettant le calcul automatique d'identifiants clés dans les ensembles de données du module «interconnexion des données» (1d) afin de trouver des ressources équivalentes à travers les ensembles de données.

3. Plateforme (1) selon la revendication 1 ou 2, **caractérisée en ce que** les instructions du module «sélection d'ontologie» (1b), exécutables par un processeur, permettent la définition des méthodes et d'indicateurs pour la sélection des ontologies utilisables, chaque ontologie étant adaptée au domaine et à la structure de données d'un fournisseur donné, et ont la capacité à soutenir l'interconnexion des données, la fiabilité et la persistance des autorités de publication , la conformité aux normes du Web sémantique.

4. Plateforme (1) selon une des revendications 1 à 3 , **caractérisée en ce que** les instructions du module «sélection d'ontologie» (1b), exécutables par un processeur, permettent la construction d'au moins un catalogue d'ontologies, dont la construction est basée sur la définition des méthodes et indicateurs, ledit catalogue comprenant pour chaque ontologie des indicateurs de son utilisation effective, le degré d'interconnexion à d'autres ontologies dans ou hors du catalogue et des métadonnées relatives à l'autorité de publication.

5. Plateforme (1) selon les revendications 1 à 4, **caractérisée en ce que** les instructions exécutables du module «sélection d'ontologie» (1b) contiennent des structures de représentation pour lors de leur exécution par un processeur, permettre aux structures de représentation ad hoc du module de sélection de structurer et de manipuler des données issues de domaines spécifiques sur le Web sémantique.

6. Plateforme (1) selon les revendications 1 à 5, **caractérisée en ce que** les instructions du module «sélection d'ontologie» (1b), exécutables un processeur, permettent de définir un processus par lequel un fournisseur de données peut sélectionner dans ledit catalogue les ontologies ou schémas ontologiques relatifs aux données à publier, et des règles de mappage ou de conversion entre le modèle de données source et la structure de données cible conforme à l'ontologie sélectionnée.

7. Plateforme (1) selon la revendication 1, **caractérisée en ce que** les instructions du module «conversion de données» (1c) exécutables par un processeur, permettent de concevoir les ensembles d'URI à utiliser sur la plate-forme, de produire des directives pour aider les éditeurs de données à trouver la bonne façon d'associer les URI à leurs données, ladite politique URI couvrant notamment les sujets suivants:
• choisir le nom de domaine et la structure du chemin afin de maximiser la persistance et l'ergonomie de l'URI;
• maintenir ou modifier les URI lorsque les ressources apparaissent, fusionnent, meurent;
• résolution de l'URI, par représentation des ressources et interconnexion entre elles;
lesdites directives pour les éditeurs suggérant des méthodes d'alignement entre les identifiants originaux ou caractéristiques de données et les URI publiées, en tenant compte de différentes situations selon que les données sources ont ou non des identifiants existants ou naturels.

8. Plateforme (1) selon la revendication 1 et 7, **caractérisée en ce que** les instructions du module «conversion de données» (1c) exécutables par un processeur, fournissent un ensemble d'outils pour concevoir et pour mettre en oeuvre au moins une bibliothèque de connecteurs pour la conversion de données, le codage desdites données pour l'internationalisation et la localisation, ledit ensemble d'outils étant réutilisable entre domaines et applications.

9. Plateforme (1) selon les revendications 1 ou 7 ou 8, **caractérisée en ce que** l'ensemble d'outils fournis par les instructions du module «conversion de données» (1c), exécutables par un processeur, est utilisé pour migrer au format RDF les ensembles de données des fournisseurs.

10. Plateforme (1) selon la revendication 9, **caractérisée en ce que** la sélection desdits ensembles de données est faite de manière à évaluer la robustesse et l'évolutivité de l'ensemble d'outils en vérifiant, au moins, les points suivants:
• la capacité des ontologies sélectionnées dans le catalogue à faire face à une grande variété de schémas de données, sans besoin d'extensions de modèle spécifiques ou de coupe de données;
• la capacité de l'ensemble de conversion d'outils pour assurer la migration des données dans la plus grande variété de formats ou les formats originaux et encodages sans travail supplémentaire ou permettant des interventions ad hoc pendant le flux de travail;
• la capacité des ensembles de données à fournir au module «interconnexion de données» (1d) des données à interconnecter soit entre les ensembles de données fournis ou avec d'autres ensembles de données appartenant à un nuage de données liées.

11. Plateforme (1) selon la revendication 1 ou 7 ou 8, **caractérisée en ce que** l'ensemble d'outils fournis par les instructions exécutables, par un processeur, du module «conversion de données» (1c) permettent d'adjoindre des licences et droits aux données.

12. Plateforme (1) selon la revendication 11, **caractérisée en ce que** l'ensemble d'outils fournis par les instructions, exécutables par un processeur, du module «conversion de données» (1c) permettent d'ajouter à chaque triplet RDF associé à des données une «notion» source, chaque source spécifiant l'origine réelle ou virtuelle desdites données.

13. Plateforme (1) selon la revendication 1, **caractérisée en ce que** l'ensemble d'outils, pour le calcul automatique d'identifiants clés dans des ensembles de données dans le module « interconnexion de données » (1d), comprend au moins une méthode d'analyse de données statistiques utilisant un modèle de liaison d'archives «Fellegi-Sunter» modifié pour l'appariement d'ensembles de données RDF.

14. Plateforme (1) selon la revendication 1, **caractérisée en ce que** l'ensemble d'outils, pour le calcul automatique d'identifiants clés dans des ensembles de données dans le module «interconnexion de données» (1d), comprend au moins un vocabulaire de métadonnées pour rattacher des résultats de calcul d'une propriété clé aux ensembles de données traitées.

15. Plateforme (1) selon la revendication 1, **caractérisée en ce que** l'ensemble d'outils, pour le calcul automatique d'identifiants clés dans des ensembles de données dans le module «interconnexion de données» (1d), comprend au moins un outil d'interconnexion basé au moins sur les identifiants clés générés par le calcul automatique d'une propriété clé.

16. Plateforme (1) selon la revendication 1, **caractérisé en ce qu'**elle comprend également un module « publication de données » (1e) pour le stockage de données sémantiques.

17. Plateforme (1) selon la revendication 16, **caractérisée en ce que** le module «publication de données» (1e) a une architecture de type serveur ou nuage de données et est soit autonome, soit intégré dans la plateforme (1).

18. Plateforme (1) selon les revendications 16 ou 17, **caractérisée en ce que** le module «publication de données» (1e) comprend au moins un système de stockage RDF, et un ensemble d'outils fournis par les instructions, exécutables par un processeur, dudit module pour permettre aux fournisseurs de données d'exposer les données, issus de l'«élévation » de données, sur la plate-forme sous forme de données liées.

19. Plateforme selon les revendications 16 ou 17 ou 18, **caractérisée en ce que** le module «publication de données » (1e) comprend également des interfaces de requête et de programmation et un ensemble d'outils pour fournir le mécanisme de déréférencement d'URI et la publication des interconnexions résultant des outils du module d'interconnexion de données (1d).

20. Plateforme (1) selon la revendication 1, **caractérisée en ce qu'**elle comprend également un module « évaluation des données et applications » (1f) pour l'évaluation du processus de l'«élévation » et le développement d'applications en amont de la publication des données sur la plateforme.

21. Plateforme (1) selon la revendication 20, **caractérisée en ce que** les instructions, exécutables par un processeur, du module « évaluation des données et applications » (1f) fournissent un ensemble d'outils pour développer des moyens pour interroger et/ou consulter et/ou visualiser des données publiques.

22. Plateforme selon la revendication 21, **caractérisée en ce que** ledit ensemble d'outils comprend au moins une interface pour demander un retour d'expérience des fournisseurs de données et des utilisateurs sur les applications développées afin d'améliorer les services et fonctionnalités desdites applications.

23. Plateforme (1) selon la revendication 21, **caractérisée en ce que** les codes exécutés dans le module «évaluation des données et applications » (1f), réalisent au moins:
• des interfaces utilisateur web pour des visualisations géographiques et applications web composites carte/temps de données statistiques;
• des interfaces web utilisateur qui informent sur la provenance et la fiabilité des données en utilisant des modèles de rattachement de licences et droits ;
• des interfaces web utilisateur qui déploient des standards du Web libre pour générer des graphiques et d'autres visualisations relatives à des informations d'arrière-plan quantitatives.

24. Plateforme (1) selon la revendication 21 ou 23, **caractérisée en ce que** les codes exécutés dans le module «évaluation des données et applications», réalisent également au moins une API pour des applications mobiles, ladite API fournissant un accès aux données liées publiées dans la plateforme (1).

25. Plateforme (1) selon la revendication 1, **caractérisée en ce que** le « système de gestion » (1a) comprend des instructions exécutables par un processeur fournissant au moins une interface de programmation (API) pour donner un accès à chaque module de la plateforme, ladite API permettant d'inclure l'«élévation » de données dans des outils externes, le développement de nouveaux modules étendant ou améliorant la publication de données.

26. Procédé de l'«élévation » de données sources en données sémantiques interconnectées comprenant un ensemble de sous-processus, exécutés au moins sur un processeur d'une architecture informatique comprenant au moins une mémoire pour le stockage de données, ledit ensemble réalisant au moins les étapes suivantes:
- sélection d'ontologies pour la publication de données,
- conversion desdites données au format approprié,
- interconnexion des données avec d'autres sources, et
- publication desdites données liées, ledit procédé étant **caractérisé en ce que**:
• le sous-processus de sélection d'ontologies comprend au moins une étape d'exécution d'un processus de recherche ontologique, d'un processus métrique d'ontologie, d'un processus de mesure de similarité d'ontologie, lesdits processus étant connectés;
• le sous-processus d'interconnexion de données exécutant au moins un calcul automatique d'identifiants clés dans des ensembles de données au moyen d'un modèle statistique.

27. Procédé selon la revendication 26, **caractérisé en ce que** le sous-processus de sélection d'ontologies comprend également les étapes de:
• définition et sélection des méthodes et des indicateurs pour la sélection des ontologies utilisables;
• construction d'un catalogue d'ontologies basé sur les méthodes et indicateurs définis;
• modélisation des connaissances spécifiques;
• mappage du modèle de données des fournisseurs aux ontologies du catalogue.

28. Procédé selon la revendication 26, **caractérisé en ce que** le sous-processus de conversion de données comprend des étapes de:
• définition d'une politique URI et production de lignes directrices pour les éditeurs de données;
• développement d'une suite d'outils de conversion ;
• application de la suite d'outils de conversion aux ensembles de données;
• rattachement des licences et droits aux données.

29. Procédé selon la revendication 28, **caractérisé en ce que** l'étape de rattachement des licences et droits aux données comprend au moins les étapes :
• d'ajout d'informations des informations de provenance aux graphes RDF à l'aide de graphes nommés et d'une extension du modèle RDF et de la syntaxe RDF/XML;
• de liaison des informations de licence à la provenance et aux graphiques nommés et fournir des moyens pour récupérer le lien d'information sur la licence à un élément de données;
• d'extension des mécanismes de requête afin de permettre la traçabilité des données utilisées dans les réponses;
• de liaison des droits d'accès aux graphes en indiquant les contraintes à vérifier pour qu'une requête puisse utiliser les données de ces graphes et fournir un formalisme pour décrire les droits;
• d'extension des mécanismes de requête afin de prendre en compte le droit d'accès lors du processus de résolution des requêtes.

30. Procédé selon la revendication 26, **caractérisé en ce que** le sous-processus d'interconnexion de données comprend également les étapes:
• de développement d'outils d'interconnexion d'ensemble de données ;
• d'application des outils d'interconnexion aux ensembles de données.

31. Procédé selon les revendications 27 à 30, **caractérisé en ce que** les méthodes et les indicateurs sont sélectionnés de façon itérative, par évaluation de leur efficacité par rapport à la construction du catalogue, la conversion des données et l'interconnexion des données.
